# EUROPÄISCHE PATENTSCHRIFT

(11) **EP 1 735 366 B1**
(45) Veröffentlichungstag und Bekanntmachung des Hinweises auf die Patenterteilung: **02.12.2009**
(21) Anmeldenummer: 05716971.6
(22) Anmeldetag: 09.03.2005
(51) Int. Cl.: C08G 59/62, C08G 59/68, C08K 3/34, H01B 3/02

(54) **WÄRMELEITFÄHIGES MATERIAL FÜR ELEKTRISCHE UND/ODER ELEKTRONISCHE BAUTEILE SOWIE VERWENDUNG DAZU**
THERMALLY CONDUCTIVE MATERIAL FOR ELECTRICAL AND/OR ELECTRONIC COMPONENTS, AND USE THEREOF
MATIERE THERMOCONDUCTRICE POUR DES COMPOSANTS ELECTRONIQUES ET/OU ELECTRIQUES ET SON UTILISATION

(30) Priorität: 15.03.2004 DE 102004012546
(43) Veröffentlichungstag der Anmeldung: 27.12.2006
(73) Patentinhaber: SIEMENS AKTIENGESELLSCHAFT, 80333 München (DE)
(72) Erfinder: HEINL, Dieter, 91085 Weisendorf (DE); DECKER, Michael, 93055 Regensburg (DE); BAYER, Heiner, 82140 Olching (DE)
(86) Internationale Anmeldenummer: PCT/EP2005/051056
(87) Internationale Veröffentlichungsnummer: WO 2005/090478

(56) Entgegenhaltungen:
- EP-A- 0 978 542
- WO-A-01/18887
- US-A- 6 054 222
- US-A- 6 150 435
- US-B1- 6 200 408

## Beschreibung

Die Erfindung betrifft ein Material, insbesondere eine Paste, für die Montage elektrischer und/oder elektronischer Bauteile in Gehäuse und/oder auf Kühlelemente, das wärmeleitend und elektrisch isolierend ist.

Platinen mit elektronischen Bauteilen werden auf Kühlelemente oder in Gehäuse montiert, wobei sie wärmeleitend verbunden und/oder mechanisch gestützt werden. Viele elektrische Bauteile oder Elektronikbauteile sind dabei auch in hohem Maße elektrisch isoliert, beispielsweise die in der Automobilbranche eingesetzten in Größenordnungen bis zu über 1000 Volt. Die dafür momentan bevorzugt verwendeten Materialien sind gefüllte Gele oder Pasten auf Silikon-Basis.

Die Materialien auf Silikon-Basis haben dabei im Wesentlichen zwei Nachteile: erstens flüchtige Bestandteile, die mit der Zeit freigesetzt werden und zweitens migrable Komponenten, die auch in kleinsten Mengen weitere Oberflächenbehandlungen wie Beschichtung, Bekleben und/oder Bemalung verhindern oder beeinträchtigen. Die Materialien müssen zudem ganz exakt aufgetragen werden, weil Verunreinigungen davon schwer wieder vollständig zu entfernen sind.

Zudem haben viele Materialien einen hohen Adhäsionsfaktor, das heißt sie verkleben leicht, so dass die einmal damit wärmeleitend und elektrisch isolierend verbundenen und/oder montierten Platinen nicht beliebig wieder gelöst oder demontiert werden können, beispielsweise zu Reparaturzwecken. Mit den bekannten Materialien dieser Art muss im Reparaturfalle immer das ganze Bauteil ersetzt werden, weil die Reparaturen unwirtschaftlich oder unmöglich sind.

Darüber hinaus sind meistens mehrere Materialien nötig, um alle Forderungen wie chemische und thermische Stabilität und mechanische Schock Resistenz, etc. zu erfüllen. Außerdem fehlen den Silikon-basierten Materialien in der Regel leichte Applizierbarkeit, Ausgasfreiheit und/oder Migrationsfreiheit.

Aufgabe der vorliegenden Erfindung ist es daher, ein Material zur Verfügung zu stellen, das wärmeleitend und elektrisch isolierend ist, massenfertigungstauglich verarbeitet werden kann, also eine mäßige Anfangsviskosität hat, im gehärteten Zustand nicht verklebt und nicht die Nachteile von Silikonen aufweist.

Gegenstand der Erfindung ist ein thermisch leitfähiges und elektrisch isolierendes Material, silikonfrei, zumindest folgende Komponenten umfassend:
a) Ein tri- oder höherfunktionelles Polyol, wobei als Polyol Polyvinylbutyral eingesetzt wird,
b) eine Epoxid-Komponente
c) ein Photoinitiatorsystem und
d) 65 bis 80 Gew% eines wärmeleitfähigen, UV-durchlässigen Füllstoffs.

Vorteilhafterweise ist das Material mit 70 bis 80 Gew% Füllstoff im Fall von Quarzmehl versetzt, bevorzugt hat es einen Füllgrad von 72 bis 78 Gew% und insbesondere bevorzugt einen Füllgrad von 73,5 bis 77 Gew%. Diese Angaben in Gew% gelten für Füllstoffe mit der Dichte von Quarzmehl. Es ist dem Fachmann bekannt, dass der Volumenfüllgrad entscheidend, für Füllstoffe mit anderen Dichten also das bevorzugte Gewichtsverhältnis anders ist.

Vorteilhafterweise ist die Epoxidkomponente bifunktionell, so dass, in Kombination mit dem hohen Anteil an Polyol-Funktionalität im copolymeren Gemisch, Moleküle mit hohem Molekulargewicht aber geringem Vernetzungsgrad resultieren. Vorteilhafterweise umfasst die Polyolkomponente ein Polyvinylbutyral und/oder ein trifunktionelles Polyester-Polyol.

Der Acetalisierungsgrad des Polyvinylbutyral wird bevorzugt bei 75% oder höher gewählt, was für eine geringe Vernetzungsdichte günstig ist. Ebenso wird die trifunktionelle Polyester-Polyol Komponente vorzugsweise auch mit hohem Molekulargewicht gewählt, vorzugsweise mit einem Molgewicht von über 800 g/mol. Gleichzeitig werden die Molmassen noch gering genug gewählt, dass man das Material noch entsprechend dosieren und applizieren kann.

Der weitere Molmassenaufbau erfolgt dann mit der Härtung, nach der Bestrahlung.

Damit wird, zumindest beim gehärteten Material, die Gefahr migrabler Komponenten und flüchtiger Bestandteile im Material so klein wie möglich gehalten. Die eingesetzten Polyole sind in den Mischungen gemäß der Erfindung grundsätzlich stabil gegen Entmischung auf Grund von Unverträglichkeit und/oder Unlöslichkeit.

Das Material wird nach einer Ausführungsform so gewählt, dass in den prepolymeren Ausgangskomponenten, also den noch nicht polymerisierten und/oder gehärteten organischen ("organisch" hier im Sinne von "kohlenstoffhaltigen") Substanzen, hinsichtlich funktioneller Gruppen mehr Hydroxygruppen enthalten sind als Epoxygruppen.

Die polymere Matrix zusammen mit den Additiven und dem Füllstoff ist ein mehrmonatig bei Raumtemperatur lagerstabiles 1-K-System mit einer mäßigen Anfangsviskosität von 50 - 250 Pas und damit einer guten Verarbeitbarkeit (Topfzeiten von 1 Stunde und mehr nach Initiierung) bei gutem Härtungsverhalten (Bestrahlungszeiten zum Teil weniger als eine Minute). Erfindungsgemäß wird eine niedrige, aber merkliche Benetzung und Haftung angestrebt, um die Kombination aus zuverlässiger thermischer Leitfähigkeit und Reparierbarkeit des gesamten Bauteils also Lösbarkeit der Bauelemente von der thermisch leitfähigen Paste, zu schaffen.

Angestrebt werden daher kautschuk- oder gummi-ähnliche Endeigenschaften der fertigen Paste. Denkbar sind auch härterer Gummi oder glasähnliche Verbindungen.

Der Photoinitiator ist bevorzugt ein Säure-freisetzender UV-Photoinitiator, beispielsweise vom Triarylsulfonium-Salz-Typ, auch in Kombination mit einem Sensibilisator, also einem Startersystem, beispielsweise einem Isopropyl-Thioxanthon. Der Photoinitiator kann beispielsweise auch durch Kombination mit einem thermischen Inititiatorsystem verbessert werden.

Die chemische Basis des Binders bildet eine kationische Copolymerisation von epoxidhaltigen Harzen mit Polyolen, wobei bevorzugt ist, dass im Reaktionsgemisch mehr Polyol als Epoxidharz vorliegt.

Die Füllstoffe sind bevorzugt mineralische Füllstoffe, die thermische Leitfähigkeit mit UV-Transparenz vereinen.

Wie hohe Füllgrade bei mäßiger Viskosität erreicht werden können, ist dem Fachmann bekannt, z. B. durch Kombinieren von Füllstoffen mit verschiedener Korngrößenverteilung.

Besonders vorteilhaft sind Füllstoffe, die keinen alkalischen sondern einen neutralen bis sauren Charakter haben, insbesondere solche, die arm an basischen Nebenprodukten sind. Beispielhaft genannt seien als Füllstoffe Aluminium-Oxid, Quarzmehl und/oder weitere kristalline Silizium-Dioxid-Komponenten. Entscheidend ist hier, dass der Füllstoff so gewählt wird, dass trotz des hohen Füllgrades eine UVinitiierte Härtung stattfindet, wobei nicht ausgeschlossen ist, dass eine gewisse thermische Nachhärtung, beispielsweise 1-30 Minuten bei einer Temperatur zwischen 50°C und 100°C, die Härtung vervollständigt.

Das System kann auch noch übliche Additive, wie Farbstoffe (soweit sie die UV-Härtung nicht behindern), Entschäumer und/oder Benetzungshilfsmittel) enthalten.

Bei der Verwendung des Materials zur wärmeleitfähigen Kontaktierung wird die fertige ungehärtete Mischung aus Epoxid- und Polyolkomponente mit Füllstoff, Photoinitiator und Additiv(en) auf das Kühlelement, das elektronische oder elektrische Bauelement (die integrierten Schaltung) die Leiterplatte und/oder die Platine aufgebracht. Es wird die Härtung durch UV-Bestrahlung initiiert, dann werden die Komponenten Platine, Bauelement und Gehäuse oder Kühlfalle montiert, also beispielsweise zusammengeschraubt, durch eine Feder verbunden oder ähnliches. Nach erfolgter Härtung entsteht ein gummiähnliches Material, das den Kontakt zwischen der mit Bauelementen bestückten Platine, dem Kühlelement und/oder Gehäuse herstellt. Manchmal wird ein zusätzlicher Temperschritt zur Vervollständigung der Härtung vorgenommen.

Das fertige Material ist ein Polymer, das Poly-β-hydroxyether Strukturen umfasst, die das Ergebnis der Umsetzung der Epoxid- mit der Hydroxyl-Komponente sind. Die Ausgangskomponenten bewirken die Polyester-Einheiten (Polycaprolactontriol) und die längeren C-C -Ketten (vom Polybutyral). Sobald alle Epoxid-Funktionen abreagiert haben ist das Material ausreichend stabil, um beispielsweise die Anforderungen und Testszenarien der Automobiltechnik zu bestehen.

Das Material wurde im Hinblick auf seine Verwendung in der Elektronik und/oder Elektrotechnik, insbesondere zur Wärmeabfuhr, zur wärmeleitenden Kontaktierung und/oder zur mechanischen Stabilisierung, z. B. gegen Vibrationen, von elektronischen Bauteilen auf Platinen und/oder in Gehäusen entwickelt.

Im folgenden wird die Erfindung noch anhand eines Beispiels näher erläutert:

Die in der unten stehenden Tabelle aufgelisteten Substanzen werden vereint, mit einer entsprechenden Apparatur gemischt und im Vakuum entgast:

| Menge | Verbindung |
|---|---|
| 32.0 g | Cycloaliphatisches Epoxy Harz |
| 14.4g | Epoxidiertes Sojabohnenöl |
| 3.20 g | Poly-Vinylbutyral |
| 97.4g | Trifunktionelles Polyesterpolyol |
| 2.35 g | Triarylsulfonium hexafluoroantimonate (Photoinitiator) |
| 0.095 | Isopropyl thioxanthone |
| 0.30 g | Entschäumer |
| 340.97 | Quartz |
| 85.24 | Quartz |
| 1.5 | Soda lime glass |

Die Polyvinylbutyral Produkte können sowohl bzgl. der Molmasse, als auch hinsichtlich ihres Acetalisierungsgrades und schließlich hinsichtlich ihres Anteils an Hydroxygruppen variieren.

Die Anfangsviskosität des wärmeleitfähigen Materials sollte so gering wie möglich sein, beispielsweise zwischen 50 und 250 Pas (gemessen mit einem Plate oder Cone Viskosimeter).

Nach einigen Sekunden Bestrahlung steigt die Viskosität auf 80 bis über 500 Pas an, so dass die Montage während der nächsten Stunde oder etwas länger stattfinden kann, ohne das vollständige Härtung eintritt.

Die Wärmeleitfähigkeit des Materials ist stark von dem Füllgrad und von Füllstoff abhängig, beispielsweise kann bei einem Füllgrad von 75 Gew% (Quartzmehl) eine Wärmeleitfähigkeit von mindestens 0,7W/mK erhalten werden. Höhere Füllgrade und stärker wärmeleitende Füllstoffe bewirken eine höhere Wärmeleitfähigkeit des Materials.

Folgende Vorteile werden durch das erfindungsgemäße Material erstmals erreicht:
- das Material ist leicht aufzutragen, weil es eine dafür geeignete mäßige Ausgangsviskosität hat,
- überflüssiges Material kann leicht wieder entfernt werden,
- mechanische Unebenheiten werden ausgeglichen und Lücken gefüllt
- keine Silikon enthalten, deshalb keine unerwünschten Nebenprodukte
- eine leichte Demontage zu Reparaturzwecken, weil das Material nur geringe Adhäsion zeigt
- geringer thermischer Kontaktwiderstand, weil das thermisch leitfähige Material großflächig über sämtliche Bauteile hinweg aufgetragen werden kann und damit optimale Wärmeabfuhr gewährleistet
- nur ein Material erforderlich, das sowohl die Leiterplatte oder Platine als auch die darauf befindlichen Bauelemente abdeckt
- wenig kostenintensive Härtungsbedingungen (Bestrahlung mit UV-Licht)
- Material ist in vollständig gehärtetem Zustand vernetzt, deshalb können in das Material eingebettete Bauelemente und Platinen hohe Vibrationslasten aushalten
- Doppelseitige SMD Bestückung ohne zusätzliche Gehäuse möglich

Die vorliegende Erfindung betrifft ein Material, insbesondere eine Paste, für die Montage elektrischer und/oder elektronischer Bauteile in Gehäuse und/oder auf Kühlelemente, das wärmeleitend und elektrisch isolierend ist. Dieses erstmals vorgestellte Material ist frei von Silikonen, hat eine hohe Wärmeleitfähigkeit bei einem hohen Füllgrad und mäßiger Viskosität. Der Endzustand wird nach UV-Aktivierung bei gegebenenfalls thermischer Nachhärtung erreicht.

## Patentansprüche

1. Thermisch leitfähiges und elektrisch isolierendes Material, zumindest folgende Komponenten umfassend:
a) ein tri- oder höherfunktionelles Polyol, wobei als Polyol Polyvinylbutyral eingesetzt wird
b) eine Epoxid-Komponente
c) ein Photoinitiatorsystem und
d) 65 bis 80 Gew% eines wärmeleitfähigen Füllstoffs.

2. Material nach Anspruch 1, wobei die Epoxidkomponente bifunktionell ist.

3. Material nach einem der Ansprüche 1 oder 2, wobei in den prepolymeren Ausgangskomponenten hinsichtlich funktioneller Gruppen mehr Hydroxygruppen enthalten sind als Epoxygruppen.

4. Material nach einem der vorstehenden Ansprüche, wobei das Polyol ein Polyvinylbutyral und ein trifunktionelles Polyester-Polyol ist.

5. Material nach einem der vorstehenden Ansprüche, wobei das Polyol ein Polyvinylbutyral ist und der Acetalisierungsgrad des Polyvinylbutyrals bei über 75% ist.

6. Material nach einem der vorstehenden Ansprüche, wobei der Photoinitiator vom Triarylsulfonium-Salz-Typ ist.

7. Material nach einem der vorstehenden Ansprüche, wobei die Füllstoffe keinen alkalischen sondern einen neutralen bis sauren Charakter haben.

8. Verwendung des Materials nach einem der vorstehenden Ansprüche in der Elektronik und/oder Elektrotechnik, insbesondere zur wärmeleitenden Kontaktierung und/oder zur mechanischen Stabilisierung von elektronischen Bauteilen auf Platinen und/oder in Gehäusen.

## Claims

1. Thermally-conductive and electrically insulating material, comprising at least the following components:
a) a trifunctional or higher functional polyol, with polyvinyl butyral being used as polyol
b) an epoxy component
c) a photoinitiator system and
d) 65 to 80% percent by weight of a thermally-conductive filler material

2. Material according to claim 1, with the epoxy component being bifunctional.

3. Material according to one of claims 1 or 2, with more hydroxy groups being contained in the prepolymer initial components, in respect of functional groups, than epoxy groups.

4. Material according to one of the preceding claims, with the polyol being a polyvinyl butyral and a trifunctional polyester polyol.

5. Material according to one of the preceding claims, with the polyol being a polyvinyl butyral and the acetalisation degree of the polyvinyl butyral being more than 75%.

6. Material according to one of the preceding claims, with the photoinitiator being a type of triaryl sufonium salt.

7. Material according to one of the preceding claims, with the filler material not exhibiting any alkali character, but instead a neutral or even an acid character.

8. Use of the material according to one of the preceding claims in electronics and/or electrical engineering, in particular for thermally-conductive contacting and/or for mechanically stabilising electronic components on printed circuit boards and/or in housings.

## Revendications

1. Matière thermoconductrice et électroisolante, comprenant au moins les composants suivantes :
a) un polyol trifonctionnel ou plus, du butyral de polyvinyle étant utilisé comme polyol
b) un composant époxy
c) un système photoinitiateur et
d) 65 à 80 % en poids d'un agent de charge thermoconducteur.

2. Matière selon la revendication 1, dans laquelle le composant époxy est bifonctionnel.

3. Matière selon l'une quelconque des revendications 1 ou 2, dans laquelle plus de groupes hydroxy que de groupes époxy sont contenus dans les composants de départ prépolymères en ce qui concerne les groupes fonctionnels.

4. Matière selon l'une quelconque des revendications précédentes, dans laquelle le polyol est un butyral de polyvinyle et un polyester-polyol trifonctionnel.

5. Matière selon l'une quelconque des revendications précédentes, dans laquelle le polyol est un butyral de polyvinyle et le degré d'acétalisation du butyral de polyvinyle est supérieur à 75 %.

6. Matière selon l'une quelconque des revendications précédentes, dans laquelle le photoinitiateur est du type de sel de triarylsulfonium.

7. Matière selon l'une quelconque des revendications précédentes, dans laquelle les agents de charge ne présentent pas un caractère alcalin, mais un caractère neutre à acide.

8. Utilisation de la matière selon l'une quelconque des revendications précédentes dans l'électronique et/ou l'électrotechnique, en particulier pour la mise en contact thermoconductrice et/ou pour la stabilisation mécanique de composants électroniques sur des platines et/ou dans des boîtiers.
